# EUROPEAN PATENT SPECIFICATION

(11) **EP 0 339 222 B1**
(45) Date of publication and mention of the grant of the patent: **22.09.1993**
(21) Application number: 89104159.2
(22) Date of filing: 09.03.1989
(51) Int. Cl.: B29C 41/22, B29C 41/18, B29C 41/38

(54) **Apparatus for molding two-tone colored plastic shells**
Vorrichtung zum Formen von zweifarbigen Kunststoffschalen
Appareil pour le moulage de coquilles plastiques en deux couleurs

(30) Priority: 25.04.1988 US 185485
(43) Date of publication of application: 02.11.1989
(73) Proprietor: DAVIDSON TEXTRON INC., Dover New Hampshire 03820-1504 (US)
(72) Inventor: Cray, John D., New Durham New Hampshire 03855 (US)
(74) Representative: Haecker, Walter

(56) References cited:
- EP-A- 0 183 344
- WO-A-87/04973
- US-A- 4 724 113
- US-A- 4 732 553

## Description

This invention pertains to an apparatus for molding a two tone colored, thin walled plastic shell in a heated open-ended mold by casting thermoplastic powder material from an open-ended charge box, which is selectively connected to the heated mold in open-ended relationship thereto to form a closed system for casting the material, and wherein a divider wall is provided in the charge box to form two sources of material and a division surface is provided on the mold to separate casting surfaces thereon, said apparatus comprising a seal means on the charge box (40) including a sealing bead thereon configured to sealingly cover the division surface and to prevent leakage of material from the casting surfaces onto the division surface, when the charge box and heated mold are connected together.

Specifically, this invention relates to an apparatus for making thin plastic shells especially suitable for use in automobile trim components such as interior door or instrument panels and more particularly to two-tone plastic shells having an integrally bonded connector joining the color sections at a bond joint therebetween.

The automotive industry has turned to the use of interior trim components such as door panels comprising a polyvinyl chloride shell. See, for example, the trim components disclosed in US-A- 3,123,403. Such components have been accepted because, inter alia, this type of construction permits a wide latitude in styling and color, and grain effects which are most desired, particularly in the interior design of automobiles.

The current state of the art includes a preformed grained vinyl shell made from dry thermoplastic powder particles which are applied to a heated shell mold from a powder box to form a continuous one piece shell.

In order to enhance the interior decor of an automobile, interior door panels and other parts have been prepared which include two separate plastic shell sections joined by a mechanical fastener.

US-A- 4,562,025 discloses a mold method and apparatus for multi-color plastic shells in which shell segments have their edges bonded at a common break-line.

Further, US-A- 4,610,620 discloses an apparatus of the general type indicated above for loading and releasing a precharge of two or more colors of thermoplastic powder from separate compartments in a charge box means for gravity flow into a mold configured to produce two shell segments and a separate overlapping color connector to bond the shell segments to form a one piece shell with two or more color tones to enhance the decor of the interior of an automobile.

In this document, an open-ended charge box means is provided with a divider wall to form two or more separate compartments, each filled with a predetermined quantity of different colored powder. The mold has a division surface which cooperates with the divider wall to separate the powder content in each compartment of the charge box means. The charge box releases the powder from the separate charge box compartments to flow evenly across the open end of the mold by gravity. A fixed gasket seals the division surface and the divider wall so as to produce separate two tone segments on the heated surfaces of the mold. In theory, the seal gasket keeps the division surface clean for a subsequent application of material thereagainst to form a connector that bonds the previously cast two tone segments to form a single piece article with an integral joint between two tone segments. In practice, such a fixed gasket must conform to a division surface on each of a number of heated molds. The molds can be heated by suitable means such as hot air units of the type shown in US-A-4,623,503. Tolerance differences in the mold dimensions may leave margin gaps between the fixed gasket and the division surface. Powder from the charge box can seep into such gaps onto the division surface to create color smudges in the finish bonded connector.

Accordingly, it is the object of the present invention to provide apparatus which solves the problem of powder particle seepage across a division surface in apparatus for molding a two tone colored thin-walled plastic shell.

This object is accomplished by means of an apparatus of the general type indicated at the outset and being characterized according to the present invention, in that that said seal means includes inflatable seal means operative to selectively bridge a gap between the divider wall and the division surface.

According to a preferred embodiment such apparatus includes the provision of an inflatable seal means on a charge box including inflatable means therein operative to selectively bridge between a divider wall and the division surface when a charge box and heated mold are connected together. The inflatable seal means includes a sealing bead thereon configured to completely cover the sealing surface and to seal the division surface to prevent seepage of material from the casting surfaces to the division surface and to prevent resultant color smudges in a subsequently formed connector bond.

According to a further preferred embodiment of the invention the inflatable seal means includes a base segment bonded to the powder box divider wall and a hollow core member connected to the sealing bead.

Another preferred feature of the invention is to prevent seepage and color smudging by providing inflatable sealing means having a sealing bead with spaced parallel side edges bounding an area congruent with the surface area of the division surface.

Still another preferred feature of the present invention is to prevent seepage and subsequent connector bond color smudging by providing a positive seal action by including an inflatable core segment with walls that expand to locate the sealing bead in pressure sealed engagement with the division surface.

Still another preferred feature of the present invention is to prevent such seepage and color smudging by the provision of a charge box having a divider wall extending beyond the side walls thereof and having a length beyond the side walls slightly less then the maximum dimension depth of a heated mold connected thereto at the division surface thereon and by providing an inflatable seal means with an expanded length when inflated which, combined with the length of the divider wall, is greater than the maximum dimension depth of the heated mold connected thereto at the division surface thereon.

Other advantages and a more complete understanding of the invention will be apparent to those skilled in the art from the succeeding detailed description of the invention and the accompanying drawings thereof, in which
Figure 1 is a perspective view of a charge box and seal assembly of the inventive apparatus;
Figure 1A is a fragmentary sectional view of a compression seal in the assembly of Fig. 1 along line 1A-1A looking in the direction of the arrows;
Figure 2 is a perspective view of a mold of the invention sealed by the charge box of Figure 1;
Figure 2A is a diagrammatic view of the joined charge box and mold of Figures 1 and 2;
Figure 3 is a sectional view showing the box and seal assembly in a deflated position;
Figure 4 is a sectional view of the seal assembly in an inflated position;
Figure 5 is a view of a part made by use of the present invention; and
Figure 6 is an enlarged sectional view of a bonded connector portion of the part shown in Figure 5.

In accordance with the present invention, hollow shell parts of a variety of forms can be processed. For illustrative purposes, Figure 5 shows a typical automobile door panel application of a multi-color, single piece interior plastic shell 10. The apparatus of the present invention, however, is equally suitable for making other interior parts such as instrument panel covers and the like. The shell 10, preferably made of polyvinyl chloride material. It is backed by a layer of polyurethane foam 12 bonded to the shell 10 by a mold process such as disclosed in US-A- 3,123,403 for an automobile arm rest. An interior reinforcing insert 14 is connected at a joint 16 to an outer door panel 18 to form an interior space 20 for a window lift mechanism (not illustrated) to raise and lower a window 22.

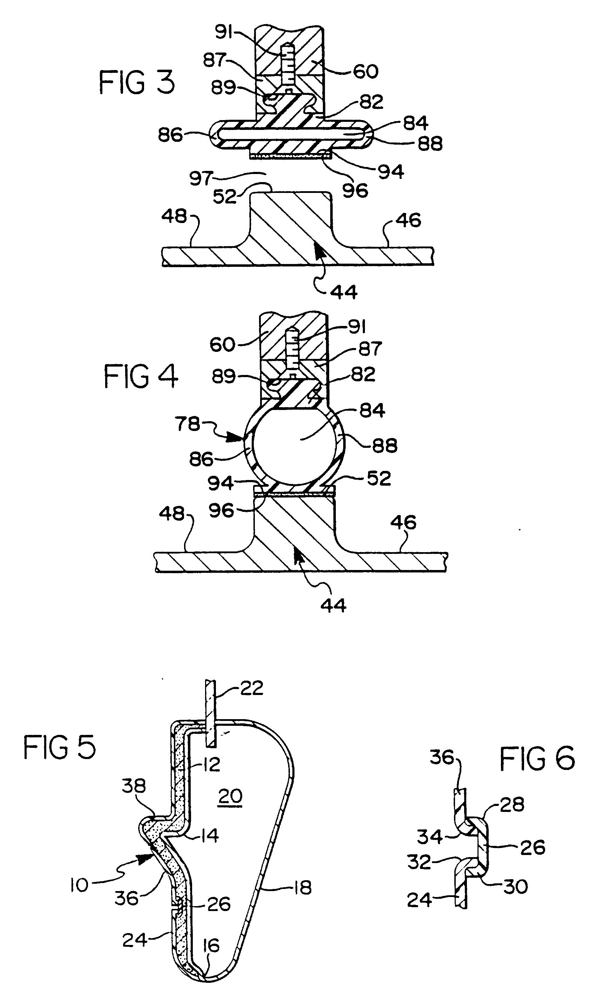

The shell is a one piece plastic part with an integral lower panel 24 of a dry castable thermoplastic material of a first color. As best seen in Figure 6, the shell 10 includes a bonded connector 26 of a selected connector color that has edges 28 and 30 that overlap and are bonded to an edge 32 of the lower panel 24 and a side edge 34 of an upper panel 36 including an armrest segment 38 formed by a dry castable thermoplastic material having a second color contrasting or complementing the color of the lower panel 24 or other interior components. For example, the upper panel can be red, blue, yellow or beige to contrast with or complement the interior color of seats, headliners, crashpads and the like. The lower panel 24 can be colored a deeper complementary two tone color of a character which has a low impact or scuff resistant qualities. The bonded connector can be a color complimentary to the colors of lower panel 24 and upper panel 36 or the same as one or the other of the panels.

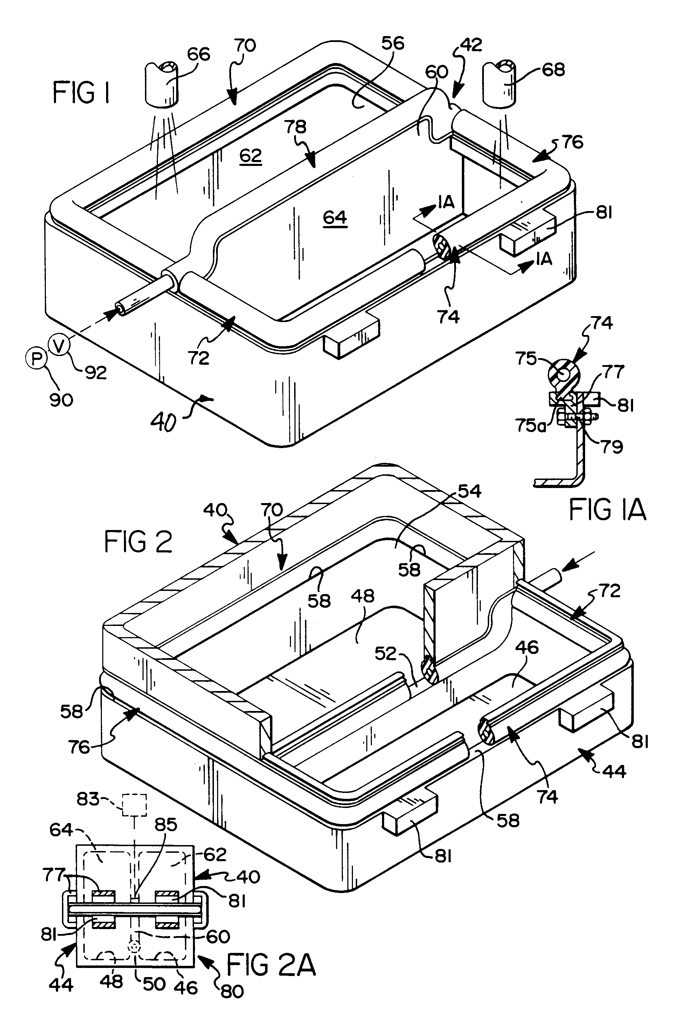

The apparatus of the present invention, shown in Figures 1-4, includes a charge or powder box 40 with a seal assembly 42. Each of the heated molds 44 is selectively coupled to the powder box 40 once the mold has been heated to a casting temperature by suitable heating means.

The heated mold 44 more particularly includes a pair of casting surfaces 46, 48 separated by a raised rib 50 therebetween. The rib 50 has a division surface 52 that extends between spaced sidewalls 54, 56 of the mold 44.

The rib 50 is located below the upper edge surfaces 58 of the walls of the mold. In the illustrated example of the invention the upper edge surfaces 58 are shown in the same plane. It should be understood that these surfaces may be at different levels depending upon the shape of the thin walled shell to be cast onto the heated mold.

The charge box 40, shown in Figure 1, includes a divider wall 60 which separates the box 40 into first and second compartments 62, 64 each of which is configured to be filled with a charge of thermoplastic particles. In Figure 2, a fragmentary section of the charge box 40 is shown on the mold 42 to illustrate the relationship thereto during the casting process. The charge in the box 40 is a dry thermoplastic material which will melt and bond together when cast against the heated surfaces 46, 48 of the mold 44. In order to maintain separation between the material in each of the compartments 62, 64, the height of divider wall 60 is greater than the maximum depth of either of the compartments 62, 64. The compartments 62, 64 are filled from diagrammatically illustrated sources 66, 68 of different colors of thermoplastic material.

The charge box 40 further includes side wall gaskets 70-76. As shown in Fig. 1A, each gasket 70-76 has a compression seal segment 75 with a base 75a slidably received for replacement in an extruded retainer 77 connected to the box by suitable fasteners (shown as bolts 79). The gaskets 70-76 seal the perimeter of the charge box 40 to the perimeter of the heated mold 44 when they are clamped together at outwardly directed wall flanges 81 as shown in Fig. 2A by clamps 77.

An inflatable seal 78 is provided on the divider wall 60 to seal the division surface 52 and to compensate for dimensional tolerance differences between different mold/powder box combinations to assure a positive seal against migration of different color materials from surfce 46 to surface 48.

Once the powder box 40 and mold 42 are clamped together,the side wall seals 70- 76 prevent the escape of material from a closed casting system 80 which is rotated by drive means 83 about an axis of rotation 85 to distribute a layer of first and second colored particles of thermoplastic material on the surfaces 46 and 48. The seal 78 is inflated during such casting to prevent flow of different colored particles between compartments 62, 64 and onto the division surface 52.

The inflatable seal 78 is configured (see Figures 3, 4) to accomplish several objectives. First, it has a base 82 connected to the divider wall 60 by a retainer 87 in fixed sealing engagement therewith to seal along the length thereof and to provide a structural base for operation between deflated and inflated positions. The retainer 87 has a dovetail groove 89 to receive the base 82 of the seal 78. A suitable screw fastener 91 holds the retainer in place on the wall 60.

The seal 78 also has a hollow core 84 with walls 86, 88 which expand and contract when the core 84 is inflated. Such inflation occurs when the core 84 is selectively connected to a source of pressure 90 by suitable valve control means 92. Third, it has a sealing bead 94 which is selectively held in pressure biased sealing relationship with the division surface 52 during a casting operation.

The sealing bead 94, more particularly, has a surface 96 thereon which completely covers the division surface 52 when the seal 78 is inflated. Consequently, there are no edge gaps for seepage of material from either of the compartments 62, 64 onto the surface 52 during the casting operation.

Figure 3 shows the seal 78 in its deflated (retracted) position. A gap 97 remains between the sealing bead 94 and the division surface 52 when the seal 78 is deflated. In order to bridge the gap and compensate for dimensional tolerance differences in the height of the rib 44 on different molds, the hollow core 84 is pressurizable to expand the walls 86, 88. Figure 4 shows the inflatable seal 78 in its inflated (expanded) position in which the sealing bead 94 is sealingly located on the surface 52.

The division surface 52 remains covered during the casting process. Consequently, it is clean when the mold 42 is separated from the powder box 44. Following such casting operation, a thin layer of material is formed on each casting surface to form separate colored segments such as panels 24 and 36 described above.

A separate bonding layer of thermoplastic material is then applied to the surface 52 in a known manner by suitable means including painting or rolling a wet slurry of a suitable thermoplastic material or by dry casting the bonding thereon. A resultant bonded connector 26, shown in Fig. 6, is thus formed to bridge the gap between the colored segments 24, 36 and to bond the segments into one integral part with a precision styling line therebetween while the segments remain in the mold. The final product is removed from the mold as an integral unit.

A typical powder casting process for a two color door panel includes the following sequence.
1. Preheat mold tool.
2. Attach the powder box to the mold when it attains casting temperature to melt the thermoplastic material.
3. Rotate charge box and mold to form separate cast segments of two tone colors.
4. Dwell period.
5. Unclamp.
6. Distribute connector bond material against clean, heated division surface.
7. Return the mold to a cure oven (or it is heated by hot air flow in a hot air processing unit) to fuse connector and two tone segments.

Further description of such a process is set forth in the aforementioned US-A- 4,610,620 Suitable thermoplastic casting materials include plasticized polyvinyl chlorides and related vinyl resins in dry powder form or in liquid slurry form for ease of gravity flow from the powder charge box during the casting steps. Typical examples of parts, plastic materials and mold processes include the following:
PVC resin, plasticizer, stabilizer, release agents and color pigments are combined in a high intensity mixer to produce a dry, flowable powder of each desired color. The process is known in the industry as dry-blending.

The various compound constituents may be selected as to type and ratio to provide the properties required both for the finished product and for ease of processing. Physical properties will not be too dissimilar from those obtained with liquid plastisol which is also used to manufacture similar products but has an inherent tendency to form objectionable drips and runs when used to make complex shapes.

Processing properties are such that when melting of the plastic powder occurs, densification results in exact reproduction of minute detail such as grain marks and stitches engraved in the mold surface.

Mold preheating temperature may range from 121 to 232 °C (250°F to 450°F). Since the thickness of the finished product is also governed by the time the powder contacts the mold, it should be understood that simultaneous charging of the powder to the mold can be of definite advantage. Also, if certain areas of the mold can be made to have a lower preheated temperature than others, it will permit molding a thinner shell in those areas, since both temperature and mold-filled time determine the final thickness of the shell. Therefore, a very flexible range, for mold-filled time, of one second to ten seconds or more has been established.

Depending on formulation, complete melting or fusion of the PVC powder can occur when mold temperature read 177 to 232 °C (350°F to 450°F).

After fusion, the mold is cooled to a temperature which will facilitate removal of the shell without damage.

Specifically, the process and apparatus of the present invention provides even and complete distribution of thermoplastic powder material onto mold surfaces to form large, long, thin walled, single piece, two color or more shells with a pin stripe or common color connector bonded to each shell segment for forming a unitary part for interior door panels or instrument panels and the like formed during short cycle mold cycles in limited plant floor space.

While representative embodiments of apparatus and process of the present invention have been shown and discussed, those skilled in the art will recognize that various changes and modifications may be made within the scope and equivalency range of the present invention.

## Claims

1. An apparatus for molding a two tone colored, thin walled plastic shell (24, 26, 36) in a heated open-ended mold (44) by casting thermoplastic powder material from an open-ended charge box (40), which is selectively connected to the heated mold (44) in open-ended relationship thereto to form a closed system for casting the material, and wherein a divider wall (60) is provided in the charge box (40) to form two sources of material and a division surface (52) is provided on the mold (44) to separate casting surfaces (46, 48) thereon, said apparatus comprising a seal means (78) on the charge box (40) including a sealing bead (94) thereon configured to sealingly cover the division surface (52) and to prevent leakage of material from the casting surfaces (46, 48) onto the division surface (52), when the charge box and heated mold are connected together;
**characterized** in that said seal means includes inflatable seal means (78) operative to selectively bridge a gap (97) between the divider wall (60) and the division surface (52).

2. The apparatus of claim 1, wherein said inflatable seal means (78) includes a base segment (82) bonded to the powder box divider wall (60) and a hollow core member (84) connected to said sealing bead (94).

3. The apparatus of claim 1 or 2, wherein said inflatable sealing means (78) has a sealing bead (94) with spaced parallel side edges bounding an area congruent with the surface area of the division surface (52).

4. The apparatus of claim 1 or 2, wherein said inflatable seal means (78) has an inflatable core member (84) with walls (86, 88) expandable to locate said sealing bead (94) in sealing engagement with the division surface (52).

5. The apparatus according to any of claims 1, 3 and 4, wherein said charge box means (40) has a divider wall (60) extending beyond the side walls (54, 56) thereof and a length beyond said side walls (54, 56) slightly less than the maximum depth of a heated mold (44) connected thereto at the division surface (52) thereon, and wherein the total height of said inflatable seal means (78) combined with the height of said divider wall (60) is greater than the depth of the heated mold (44) at the division surface (52) thereon.

## Patentansprüche

1. Vorrichtung zum Formen einer zweifarbigen, dünnwandigen Kunststoffschale (24, 26, 36) in einer beheizten, ein offenes Ende aufweisenden Form (44) durch Gießen eines thermoplastischen Pulvermaterials aus einer ein offenes Ende aufweisenden Beschickungsbox (40), welche selektiv mit der beheizten Form (44) derart verbunden wird, daß die offenen Enden (der Form und der Box) relativ zueinander eine solche Position einnehmen, daß ein geschlossenes System zum Gießen des Materials erhalten wird, wobei in der Beschickungsbox (40) eine Trennwand (60) vorgesehen ist, um zwei Materialquellen zu bilden, und wobei an der Form (44) eine Trennfläche (52) vorgesehen ist, um die daran vorgesehenen Gießflächen (46, 48) zu trennen, wobei die Vorrichtung an der Beschickungsbox (50) Abdichteinrichtungen (78) aufweist, die einen daran vorgesehenen Dichtungsstrang (94) umfassen, der derart ausgebildet ist, daß er die Trennfläche (52) dichtend bedeckt und das Lecken von Material von den Gießflächen (46, 48) auf die Dichtflächer (52) verhindert, wenn die Beschickungsbox und die beheizte Form miteinander verbunden werden,
**dadurch gekennzeichnet,** daß die Abdichteinrichtungen aufblasbare Dichtungseinrichtungen (78) umfassen, welche wirksam sind, um einen Spalt (97) zwischen der Trennwand (60) und der Trennfläche (52) selektiv zu überbrücken.

2. Vorrichtung nach Anspruch 1, bei der die aufblasbaren Dichtungseinrichtungen (78) ein Basissegment (82) umfassen, welches mit der Trennwand der Beschicktungsbox verklebt ist, sowie ein hohles Kernelement (84), welches mit dem Dichtungsstrang (94) verbunden ist.

3. Vorrichtung nach Anspruch 1 oder 2, bei der die aufblasbaren Dichtungseinrichtungen (78) einen Dichtungsstrang (94) mit zwei im Abstand voneinander vorgesehenen parallelen Seitenkanten aufweisen, die einen Bereich begrenzen, der deckungsgleich mit dem Oberflächenbereich der Trennfläche (52) ist.

4. Vorrichtung nach Anspruch 1 oder 2, bei der die aufblasbaren Dichtungseinrichtungen (78) ein aufblasbares Kernelement (84) mit Seitenwänden (86,88) aufweisen, die ausdehnbar sind, um den Dichtungsstrang in dichtendem Eingriff mit der Trennfläche (52) zu positionieren.

5. Vorrichtung nach einem der Ansprüche 1, 3 und 4, bei der die Beschickungsbox (40) eine Trennwand (60) aufweist, die sich über die Seitenwände (54, 56) derselben (der Box) hinaus erstreckt, wobei die Länge jenseits der Seitenwände (54, 56) geringfügig kleiner ist als die maximale Tiefe einer beheizten Form (44), die damit an einer daran vorgesehenen Trennfläche (52) verbunden ist, und bei der die Gesamthöhe der aufblasbaren Dichtungseinrichtungen (78) in Kombination mit der Höhe der Trennwand (60) größer ist als die Tiefe der beheizten Form (44) an der daran vorgesehenen Trennfläche (52).

## Revendications

1. Appareil pour mouler une coquille plastique à paroi mince et en deux couleurs (24, 26, 36) dans un moule (44), à extrémité ouverte chauffé, par coulée d'une matière thermoplastique pulvérulente à partir d'une boîte à charges (40) à extrémités ouverte qui est reliée sélectivement au moule chauffé (44) par les extrémités ouvertes pour former un système fermé pour couler la matière, et dans lequel une paroi diviseuse (60) est prévue dans la boîte à charges (40) pour former deux sources de matière et une surface de division (52) est prévue sur le moule (44) pour séparer les surfaces de coulée (46, 48) sur celui-ci, ledit appareil comprenant un dispositif d'étanchéité (78) sur la boîte à charges (40) comportant une baguette d'étanchéité (94) configurée pour recouvrir de manière étanche la surface de division (52) et pour empêcher la matière de fuir des surfaces de coulée (46, 48) sur la surface de division (52) lorsque la boîte à charges et le moule chauffé sont reliés l'un à l'autre, caractérisé en ce que ledit dispositif d'étanchéité comprend un dispositif d'étanchéité gonflable (78) efficace pour combler sélectivement un interstice (97) entre la paroi diviseuse (60) et la surface de division (52).

2. Appareil selon la revendication 1, dis lequel ledit dispositif d'étanchéité gonflable (78) comprend un segment de base (82) relié à la paroi diviseuse (60) de la boîte à poudres et un élément formant noyau creux (84) relié à ladite baguette d'étanchéité (94).

3. Appareil selon la revendication 1 ou 2, dans lequel ledit dispositif d'étanchéité gonflable (78) comporte une baguette d'étanchéité (94) dont les bords latéraux parallèles délimitent une surface dont l'aire coïncide avec l'aire de la surface de division (52).

4. Appareil selon la revendication 1 ou 2, dans lequel ledit dispositif d'étanchéité gonflable (78) comporte un élément formant noyau gonflable (84) dont les parois (86, 88) sont extensibles pour amener ladite baguette d'étanchéité (94) en contact étanche avec la surface de division (52).

5. Appareil selon l'une quelconque des revendications 1,3 et 4, dans lequel ladite boîte à charges (40) a une paroi diviseuse (60) qui s'étend au-delà de ses parois latérales (54, 56) et une longueur au-delà desdites parois latérales (54, 56) légèrement inférieure à la profondeur maximale d'un moule chauffé (44) relié à la boîte au niveau de la surface de division (52), et dans lequel la hauteur totale dudit dispositif d'étanchéité gonflable (78) combinée à la hauteur de ladite paroi diviseuse (60) est supérieure à la profondeur du moule chauffé (44) au niveau de la surface de division (52).
